# EUROPEAN PATENT APPLICATION

(11) **EP 0 608 706 A1**
(43) Date of publication of application: **03.08.1994**
(21) Application number: 94100351.9
(22) Date of filing: 12.01.1994
(51) Int. Cl.: C02F 1/44, D01C 3/02, C07K 15/00

(54) **Method to recover sericin dissolved in degumming baths, plant to carry out such method and sericin thus obtained**

(30) Priority: 20.01.1993 IT UD930003
(71) Applicant: CASCAMI SETA - FILATURE SERICHE RIUNITE SpA, I-13068 Vallemosso (VC) (IT)
(72) Inventor: Velo, Luigi Maria, I-10069 Villar Perosa (Torino) (IT)
(74) Representative: Petraz, Gilberto Luigi

(57) **Abstract**

Method to recover sericin dissolved in degumming baths arriving from the degumming treatment of waste silk and/or yarns of raw silk (seta tratta) and/or silk fabrics, the degumming baths (11-111) undergoing an ultrafiltration step (13), a possible storage step (35) being included, the ultrafiltration step (13) producing at least a first concentrate (15-115) and a first product of permeation (14-114).

Plant to carry out the method of recovery of sericin, which is positioned downstream of the degumming plant according to one or another of the preceding claims and comprises an ultrafiltration unit (38).

Sericin recovered from baths which degum yarns of raw silk (seta tratta), silk fabrics or waste silk, the sericin being obtained by the above method and/or plant

## Description

This invention concerns a method to recover sericin dissolved in degumming baths and a plant to carry out such method and concerns also the sericin obtained with such method and/or such plant, as set forth in the respective main claims.

The method to recover sericin according to the invention is employed in the field of textiles and, in particular in the treatment of the baths degumming yarns of raw silk (seta tratta), waste silk or silk fabrics to be dyed, whereby the silk fabrics are freed of the sericin wholly or partly.

It is known that the raw silk fibres are covered by a gummy protective protein substance called sericin or gum of silk, which may reach 15 to 25% by weight of the cocoon.

Degumming is the name given to the operation whereby the silk fibres are freed of the sericin so as to make the silk soft and glossy and more suitable for the successive processes such as spinning and dyeing.

For yarns of raw silk (seta tratta) there is a method of degumming under pressure, which produces as its output a solution containing demineralized water and substantially pure sericin, which is employed in the field of cosmetics and pharmaceuticals since it is non-allergic.

This method, however, cannot be used for waste silk nor for silk fabrics.

In the case of waste silk and silk fabrics the degumming is performed by employing a heated solution of soda ash and soap, in which the silk fabric or waste silk is immersed and is washed thereafter to remove the last residues of sericin. This second degumming method can be used also for yarns of raw silk (seta tratta).

The baths leaving the degumming step have a high content of sericin and, in view of their very high content of organic substances, have to undergo a purification treatment so as to comply with the limits laid down by law relating to the discharge of industrial effluents before they can be discharged.

Such treatments require purification plants entailing high operating costs, and the carrying out of the treatments creates serious problems inasmuch as the processes in question are very delicate.

The present applicants have investigated, tested and brought about this invention so as to overcome the shortcomings of the state of the art and to achieve further advantages.

This invention is set forth and characterised in the respective main claims, while the dependent claims describe variants of the idea of the main solution.

One purpose of this invention is to provide a method to treat the baths being discharged from the step of degumming raw silk yarns, silk fabrics or waste silk so as to recover the sericin contained in those baths and to make the industrial effluent compatible with the ecological problems of the environment.

Another purpose of the invention is to provide a plant that overcomes the problems of pollution by the effluent waters coming from the degumming step by means of recovery of the protein substances and by concentrating and possibly by rendering innocuous the other polluting substances.

A further purpose of the method is to reduce the pollution and impact on the environment arising from discharging into the environment waters with a high content of organic substances and with polluting substances.

The method according to the invention makes possible a great financial saving owing to reduction of the polluting load of the degumming baths to be disposed of and owing to recovery of the sericin thus obtained which has an undoubted commercial value.

In the case of baths for the degumming of silk fabrics, waste silk or raw silk yarns with the use of soda ash and soap, the method according to the invention includes the following steps:
- possible storage of degumming baths containing a solution of water, soda ash and sericin;
- a step of ultrafiltration of the solution up to a ratio of concentration of 15-25%, but advantageously 20% by volume; this step generates two currents, respectively a product of first purification (first product of permeation) and a first concentrated product (first concentrate), each of which undergoes its own method, which is substantially as follows:
   A) treatment of the first product of permeation coming from the ultrafiltration and consisting substantially of a solution of water and salts by means of a step of inverted osmosis up to a maximum ratio of concentration of 8-12%, but advantageously 10% by volume, thus obtaining:
      - on the one hand a second product of purification (called second product of permeation) consisting of water with a low saline content, which is discharged directly into the environment without requiring the stage of biological purification, and
      - on the other hand a second concentrated product (called second concentrate) which is possibly dried to produce a dry powder, which is disposed of as a special waste;
   B) treatment of the first concentrate coming from the ultrafiltration step by means of an evaporation step and thus producing;
      - on the one hand a current of the product of evaporation, which is condensed before being discharged into the environment and
      - on the other hand a third concentrated product (called third concentrate) which is possibly dried to produce a dry protein powder consisting substantially of sericin containing some pollutants such as salts, nitrogen, metals and ashes.

These pollutants are then possibly eliminated with a further step of purification of the sericin.

The percentage and composition of the pollutants in the dry protein powder or in the initial protein liquid vary considerably, depending on whether the baths have been used for the degumming of raw silk yarns, or silk fabrics or waste silk.

The sericin thus obtained can be used, depending on its degree of purity, in the field of detergents or nitrogen fertilizers, or fine organic chemicals as a cosmetic or pharmaceutical product, or in the extrusion of new yarns.

Where yarns and/or fabrics of raw silk (seta tratta) are degummed under pressure, the degumming baths consist substantially of a solution containing only pure sericin and water. This solution, possibly after storage, undergoes the ultrafiltration step and the resulting concentrated product is cooled or treated with a consequent precipitation of solid sericin, which is insoluble and is recovered by simple mechanical filtration.

The sericin retained by the mechanical filtration undergoes possibly a drying step to obtain sericin powder.

We shall now describe a possible plant to carry out the method of treatment of the degumming baths by means of soap and soda ash according to the invention.

The plant according to the invention may comprise:
- a possible tank to store spent degumming baths; this tank becomes necessary when the baths contain solids in suspension to be deposited or are stored before the successive steps;
- an ultrafiltration unit with membranes;
- a reverse osmosis unit;
- an evaporator;
- a drier.

In the event of treatment of degumming baths coming from a degumming treatment under pressure of yarns or fabrics of raw silk (seta tratta), the treatment plant according to the invention may comprise:
- a possible tank to store spent degumming baths; this tank become necessary when the bath contain solids in suspension to be deposited or are stored before the next step;
- an ultrafiltration unit with membranes;
- a cooling and/or treatment and precipitation tank;
- a separator of a mechanical filter type for instance;
- a drier.

The whole plant and working cycle are operated and kept continually under control, for instance by means of programmable control units or by means of a central data processing and control unit.

The working cycle of the plant is advantageously discontinuous inasmuch as the ultrafiltration membranes and the reverse osmosis membranes have to be periodically cleaned and/or regenerated to ensure proper working of the plant itself.

Moreover, the evaporator and the drier require frequent washing to ensure a good yield of the relative process.

The attached figures are given as a non-restrictive example and show two preferred solutions of the invention as follows:
- Fig.1: is a block diagram of the treatment method of degumming baths using soap and soda ash according to the invention;
- Fig.2: is a block diagram of the treatment method of degumming baths under pressure according to the invention;
- Fig.3: is a diagram of a plant to carry out the method of Fig.1;
- Fig.4: is a diagram of a plant to carry out the method of Fig.2.

The reference number 10 in the attached figures denotes generally a method to recover sericin dissolved in degumming baths 11 according to the invention.

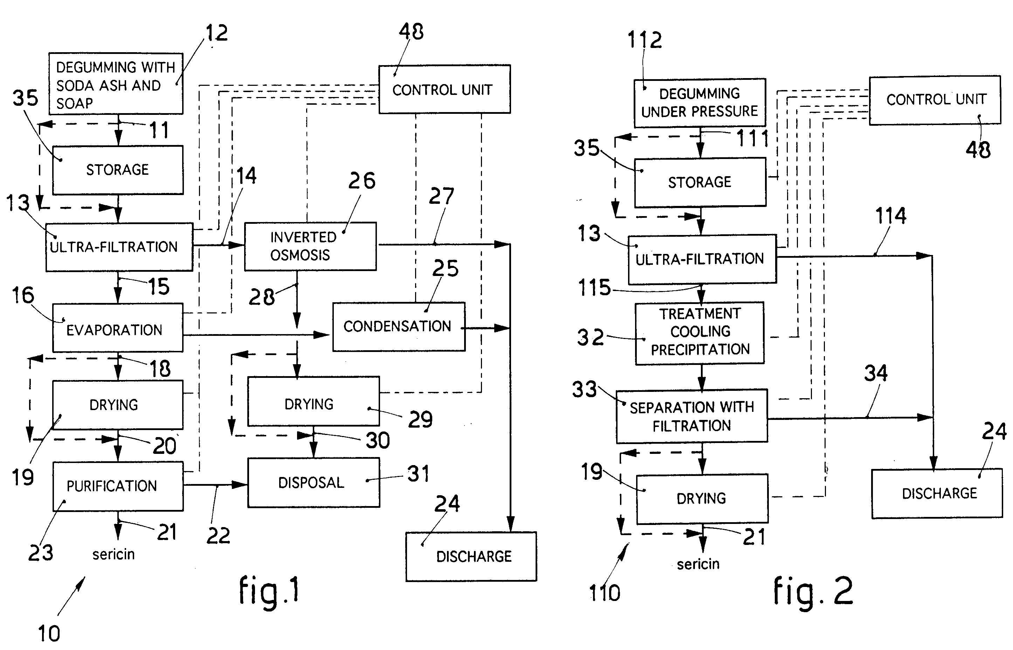

Fig.1 shows a method to recover sericin from degumming baths, the method being carried out with soap and soda ash to degum silk fabrics, waste silk or yarns of raw silk (seta tratta).

The degumming baths 11 coming from the step of degumming 12 with soap and soda ash, possibly after storage 35 in possible appropriate storage tanks 37, undergo an ultrafiltration step 13, from which there emerge two currents, namely a first product of permeation 14 and a first concentrate 15 respectively.

The ultrafiltration step 13 has a ratio of concentration of about 15-25%, but advantageously 20% by volume.

Each of the first product of permeation 14 and the first concentrate 15 undergoes a special treatment which is described below.

The first concentrate 15, which consists substantially of water and sericin, is further concentrated by an evaporation step 16, whence there emerge a current of the product of evaporation 17 and a current of third concentrate 18.

The current of the product of evaporation 17, after condensation 25, is sent to the discharge of liquid effluents 24 for disposal.

The third concentrate 18 undergoes a possible drying step 19, whence there emerges a protein powder 20 containing sericin 21 and pollutant substances 22 such as ashes, nitrogen, metals, etc. contained in the starting material.

The protein powder 20 may then undergo purification treatments 23 to yield, on the one hand, substantially pure sericin 21 and, on the other hand, the pollutant substances 22.

The first product of permeation 14 undergoes a treatment of reverse osmosis 26, whence there emerge two currents, namely a second product of permeation 27, which is sent to the discharge 24 of liquid effluents, and a second concentrate 28 respectively.

This second concentrate 28 is a chemically heterogeneous mixture containing substances such as amines, borates, silicates, fats, proteins of a low molecular weight, sodium carbonate and sodium bicarbonate and soaps.

This second concentrate 28 undergoes a possible drying treatment 29, which produces a powder 30 that is sent for disposal 31.

Fig.2 shows a method 110 for recovery of substantially pure sericin 21 from the degumming baths 111 arriving from the step of degumming under pressure 112 the yarns of raw silk (seta tratta).

These degumming baths 111 consisting substantially of an aqueous solution of pure sericin, after possible storage 35 in an appropriate storage tank 37, undergo an ultrafiltration step 13 whence a first product of permeation 114 and a first concentrate 115 emerge.

The first product of permeation 114 complies with the limits established by law and is sent directly to the discharge 24 of liquid effluents without undergoing further treatment.

The first concentrate 115 undergoes a treatment and/or cooling and precipitation step 32, in which the dissolved sericin contained is precipitated on the bottom and which is followed by a separation step 33 carried out, for instance, by mechanical filtration, from which there emerge a current of separated material and a current of filtrate.

The current of filtrate or liquid current 34 leaving the mechanical filtration 33 is sent directly to the discharge 24, whereas the current of separated material, namely the precipitated sericin 21, is collected after possible drying 19, for use in the cosmetic and/or pharmaceutical industries, for instance.

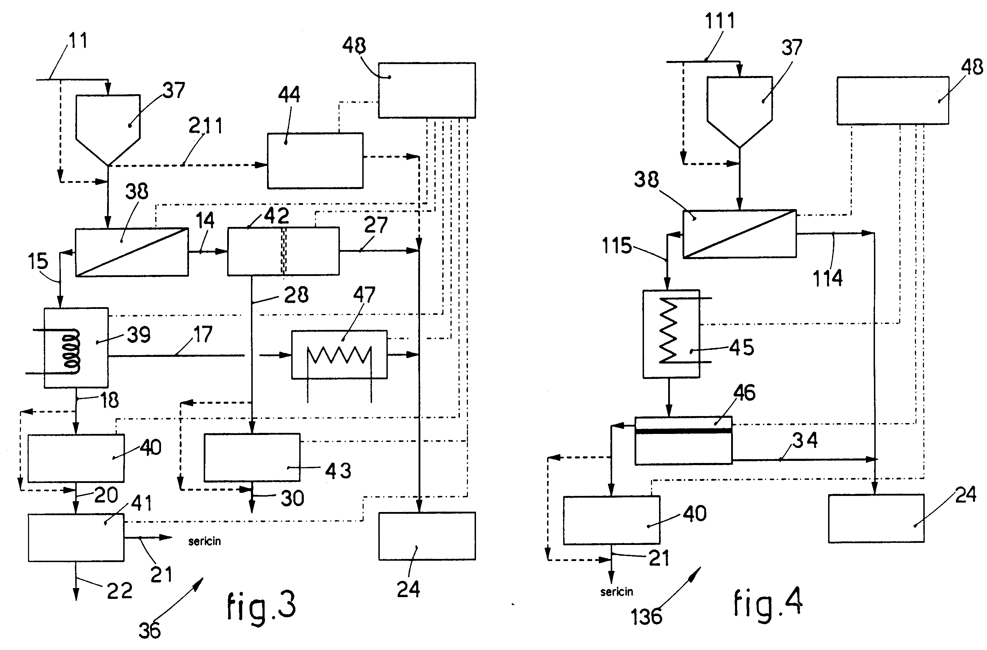

Fig.3 shows diagrammatically a possible plant 36 to carry out the method of recovery 10 of sericin from degumming baths 11. In this case the plant 36 comprises substantially:
- a possible storage tank 37 in which the spent degumming baths 111 are collected;
- an ultrafiltration assembly 38 with a ratio of concentration between 15% and 25%, but advantageously about 20% by volume, this assembly 38 consisting of one or more ultrafiltration units in series:
- an evaporator 39 in which the first concentrate 15 leaving the ultrafiltration assembly 38 is treated;
- a first drier 40 to treat the third concentrate 18 leaving the evaporator 39;
- a purification unit 41 to recover, on the one hand, pure sericin 21 and, on the other hand, pollutant substances 22 such as ashes, salts, etc.;
- a reverse osmosis unit 42 with a ratio of concentration between 8% and 12%, but advantageously about 10% by volume, to treat the first product of permeation 14 arriving from the ultrafiltration unit 38:
- a possible second drier 43 to treat the second concentrate 28 leaving the reverse osmosis unit 42:
- a condenser 47 to condense the product of evaporation 17 leaving the evaporator 39 so as to enable it to be disposed of through the discharge 24 of liquid effluents.

The degumming baths 211, when they contain a modest load of organic substance such as, for instance, the waters coming from the last washing steps, can be sent directly to a biological purification plant 44 for purification of liquid effluents without recovery of sericin and are sent thereafter to the discharge 24 of liquid effluents.

Fig.4 gives a diagram of a possible plant 136 to carry out the method of recovery 110 of sericin from degumming baths 111 coming from the step of degumming under pressure 112 the yarns of raw silk (seta tratta). In this case the plant 136 comprises substantially:
- a possible storage tank 37 in which the spent degumming baths 111 can be collected;
- an ultrafiltration assembly 38 with a ratio of concentration of about 15-25%, but advantageously 20% by volume, consisting of one or more ultrafiltration units in series:
- a treatment and/or cooling tank 45 in which the sericin is precipitated from the concentrate 115;
- a unit 46 to separate solid from liquid, which in this case consists of a mechanical filter;
- a possible drier 40 to dry substantially pure sericin retained on the mechanical filter.

The cycle of treatment of the degumming baths 11-111 according to the invention is advantageously of a discontinuous type inasmuch as the ultrafiltration assembly 38 and the reverse osmosis unit 42 have to be halted periodically for the cleaning and/or regeneration of the respective membranes.

The plant 36-136 to carry out the method to recover sericin is advantageously kept under constant control by a programming and control unit 48.

We list below as a mere example the rates of flow of the various process currents of a plant 36 which treats an initial rate of flow of degumming baths 11 of 210 cu.metres per day:

| | |
|---|---|
| - current 11 of degumming baths: | 210 cu.mts/day |
| - current 14 of first product of permeation: | 200 cu.mts/day |
| - current 15 of first concentrate: | 10 cu.mts/day |
| - current 17 of product of evaporation: | 8.5 cu.mts/day |
| - current 18 of third concentrate: | 1.5 cu.mts/day |
| - current 20 of protein powder: | 400 kgs/day |
| - current 27 of second product of permeation: | 180 cu.mts/day |
| - current 28 of second concentrate: | 20 cu.mts/day. |

This makes clear the great quantity of recovered protein powder 20 consisting mainly of sericin and also the great reduction of the rate of flow of the currents to be treated before they are discharged as liquid effluents.

The method according to the invention overcomes, on the one hand, the problems of environmental pollution as regards disposal of the degumming baths 11-111 and ensures, on the other hand, the recovery of sericin which can be employed in other fields.

## Claims

1. Method to recover sericin dissolved in degumming baths arriving from the degumming treatment of waste silk and/or yarns of raw silk (seta tratta) and/or silk fabrics, the method being characterized in that the degumming baths (11-111) undergo an ultrafiltration step (13), a possible storage step (35) being included, the ultrafiltration step (13) producing at least a first concentrate (15-115) and a first product of permeation (14-114).

2. Method as in Claim 1, whereby the first concentrate (115) coming from the ultrafiltration step (13) undergoes a treatment and/or cooling step (32) with a consequent precipitation of sericin and thereafter a step of separation (33) by filtration, whence there emerge a current of separated material and a current of filtrate (34), the current of separated material undergoing a possible drying step (19) to produce substantially pure sericin (21) which is dry in the form of a solid or a powder.

3. Method as in Claim 1 or 2, whereby the current of the first product of permeation (14-114) coming from the ultrafiltration step (13) and the current of filtrate (34) coming from the separation step (33) are sent for discharge (24).

4. Method as in Claim 1, whereby the first concentrate (15) coming from the ultrafiltration step (13) undergoes an evaporation step (16), whence there emerge a current of a product of evaporation (17) and a third concentrate (18), which undergoes a purification step (23) that produces a current of pollutants (22) and pure sericin (21), a drying step (19) from which a protein powder (20) emerges being advantageously included between the evaporation step (16) and the purification step (23).

5. Method as in Claim 1 or 4, whereby the current of the first product of permeation (14) leaving the ultrafiltration step (13) undergoes a reverse osmosis step (26), whence there emerge respectively a current of a second product of permeation (27) and a current of second concentrate (28), which is sent for disposal (31).

6. Method as in Claim 5, whereby the current of second concentrate (28) undergoes a possible drying treatment (29) before being sent for disposal (31).

7. Method as in any of Claims 4 to 6 inclusive, whereby the current of the product of evaporation (17) undergoes a condensation step (25) before being sent for discharge (24).

8. Method as in any of Claims 4 to 7 inclusive, whereby the current of pollutants (22) coming from the purification step (23) is sent for disposal (31).

9. Method as in any claim hereinbefore, whereby the ultrafiltration step (13) is carried on until a ratio of concentration between 15% and 25%, but advantageously 20% by volume, is achieved.

10. Method as in any claim hereinbefore, whereby the reverse osmosis step (26) is carried on until a ratio of concentration between 8% and 12%, but advantageously 10% by volume, is achieved.

11. Method as in any claim hereinbefore, whereby the method is controlled by a control unit (48) for management of the various steps.

12. Plant to carry out the method of recovery of sericin, which is positioned downstream of the degumming plant according to one or another of the preceding claims and is characterized in that it comprises an ultrafiltration unit (38).

13. Plant as in Claim 12, which comprises a possible storage tank (37) to collect degumming baths (11-111), a treatment and/or cooling tank (45), a separation/filtration unit (46) and a possible drier (40).

14. Plant as in Claim 12, which comprises a possible storage tank (37) to collect degumming baths (11-111), an evaporator and a possible drier (40).

15. Plant as in Claim 14, which comprises a purification unit (41) to recover sericin (21).

16. Plant as in Claim 14 or 15, which comprises a reverse osmosis unit (42) to treat the first product of permeation (14) coming from the ultrafiltration unit (38).

17. Plant as in any of Claims 12 to 16 inclusive, which comprises a data processing and control unit (48) that governs the plant (36-136) itself.

18. Sericin recovered from baths which degum yarns of raw silk (seta tratta), silk fabrics or waste silk, the sericin being characterized in that it is obtained by a method according to Claims 1 to 11 inclusive.

19. Sericin recovered from baths which degum yarns of raw silk (seta tratta), silk fabrics or waste silk, the sericin being characterized in that it is obtained by a plant according to Claims 12 to 17 inclusive.
